# EUROPÄISCHE PATENTANMELDUNG

(11) **EP 2 811 155 A1**
(43) Veröffentlichungstag der Anmeldung: **10.12.2014**
(21) Anmeldenummer: 13002848.3
(22) Anmeldetag: 03.06.2013
(51) Int. Cl.: F03B 11/02, F03B 11/00

(54) **Durchströmturbine**

(71) Anmelder: Kraus, Karl, 79777 Ühlingen-Birkendorf (DE); Kraus, Oliver, 79777 Ühlingen-Birkendorf (DE)
(72) Erfinder: Kraus, Karl, 79777 Ühlingen-Birkendorf (DE); Kraus, Oliver, 79777 Ühlingen-Birkendorf (DE)
(74) Vertreter: Hössle Patentanwälte Partnerschaft

(57) **Zusammenfassung**

Durchströmturbine (10) mit einem eine Vielzahl von Turbinenschaufeln (14) aufweisenden Turbinenrad (12), dessen Drehachse (D) sich im wesentlichen horizontal erstreckt, und mit einem das Turbinenrad (12) aufnehmenden Turbinengehäuse (16), wobei die Turbinenrad (12) in Längserstreckung in mindestens zwei Turbinenradabschnitte (T1, T2, T3, T4) unterteilt ist und das Turbinengehäuse (16) den einzelnen Turbinenradabschnitten (T1, T2, T3, T4) zugeordnete Gehäusekammern (K1, K2, K3, K4) aufweist, durch die jeweils Wasser auf die Turbinenradabschnitte (T1, T2, T3, T4) strömt.

## Beschreibung

Die vorliegende Erfindung betrifft eine Durchströmturbine. Insbesondere betrifft die Erfindung eine Durchströmturbine zur Verwendung in einer (Klein-)Wasseranlage mit stark variablen Teilwassermengen.

In Situationen, in denen Wasser durch vergleichsweise kleine Öffnungen einströmt, wie z.B. eine Schachtöffnung, durch die aufgrund der benötigten Abmessungen kein Wasserrad hindurch passt, ist der Einsatz von kompakten wasserangetriebenen Maschinen wie Durchströmturbinen angezeigt.

Bei sich stark ändernden Wassermengen stellt sich die Frage nach der Optimierung des Wirkungsgrades einer Durchströmturbine. Dies ist bspw. bei Ausläufen von Kläranlagen und Zu- und Ausläufen von Kühlwasseranlagen der Fall.

Aus der DE-PS 605 291 ist eine Durchströmturbine mit axial unterteiltem Laufrad und axial unterteilter regelbarer Einlaufvorrichtung bekannt.

Aus der DE 26 12 205 A1 ist es zur Stromgewinnung im Abwasserbereich bekannt, Abwasser und Regenwasser am Anfallort einer Turbine mit Generator zuzuführen.

Aus der DE 199 29 939 A1 ist ein preisgünstig herstellbares Kleinwasserkraftwerk mit hohem erreichbarem Wirkungsgrad bekannt, das aus einem Rahmen besteht, der eine waagerecht drehende Turbine trägt. Das Wasser wird mit Strahlrohren von oben auf die Turbine aufgespritzt und fließt im Mittelpunkt nach unten ab. Die Turbine verfügt nur über aufgeschweißte Leitschaufeln, die völlig starr sind. Ein Gehäuse für die Turbine wird nicht benötigt.

Demgegenüber wird erfindungsgemäß eine Durchströmturbine mit den Merkmalen des Anspruchs 1 vorgeschlagen.

Der Erfindungsgedanke besteht darin, zur Erhöhung des Wirkungsgrads einer Durchströmturbine eine Aufteilung des Turbinenrads in mehrere Abschnitte vorzusehen, wobei jedem Abschnitt Wasser getrennt über entsprechend zugeordnete Kammern des Turbinengehäuses zugeleitet wird. Eine durchgängige Trennung sowohl des Turbinenrads in einzelne Abschnitte als auch des Gehäuses in entsprechende Gehäusekammern ermöglicht selbst bei kleinen (Teil-)Wassermengen einen über die gesamte Breite des Turbinenrads durchgängigen Wasserstrahl, der ausreichend Energie erzeugt, damit die Durchströmturbine selbst bei solch kleinen Wassermengen einen akzeptablen Nutzungsgrad aufweist.

Die Gehäusekammern können als unabhängig voneinander regelbare Einlaufkanäle ausgebildet sein. Die Regelung kann mittels geeigneter Elemente erfolgen, bspw. mittels Deckeln, Schieber, Ventilen oder Stellklappen. Die erfindungsgemäße unabhängige Regelung erweist sich als vorteilhaft im Hinblick auf eine Erhöhung des Wirkungsgrads. Durch die unabhängige Regelung entsteht in den einzelnen Kammern bzw. Einlaufkanälen ein Staudruck. Bspw. kann die Regelung derart erfolgen, dass die einzelnen Kanäle/Kammern den Großteil der Zeit bis mindestens zur Höhe der Einlauföffnung gefüllt sind.

Die Unterteilung des Turbinenrads in einzelne Abschnitte kann durch Trennelemente erfolgen, die im wesentlichen senkrecht zu einer Längserstreckung (d.h. der Drehachsenerstreckung) des Turbinenrads angeordnet sind. Die Trennelemente können zwischen den Turbinenschaufeln angeordnet sein. Alternativ können die Trennelemente als vollständige Trennscheiben auf die Turbinenradwelle aufgesetzt sein und die Turbinenschaufeln sind abschnittsweise zwischen die Trennscheiben gesetzt.

Jeder Gehäusekammer kann eine Zuführleitung vorgeschaltet sein, wodurch das Rückstaupotential erhöht und somit der Wirkungsgrad weiter verbessert wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
Figur 1 zeigt in perspektivischer, teilgeöffneter Darstellung ein Ausführungsbeispiel einer Durchströmturbine gemäß der Erfindung.
Figur 2 zeigt einen Querschnitt durch eine Kammer bzw. einen Abschnitt der Durchströmturbine der Figur 1.
Figur 3 zeigt eine Weiterbildung der Durchströmturbine der Figur 1 in perspektivischer Darstellung.
Figur 4 zeigt die Weiterbildung der Figur 3 in anderer perspektivischer Ansicht mit Ventilelementen zur Regelung.
Figur 5 zeigt in anderer Weiterbildung eine alternative Regelung mittels einer Stellklappe in teilgeöffneter Darstellung.

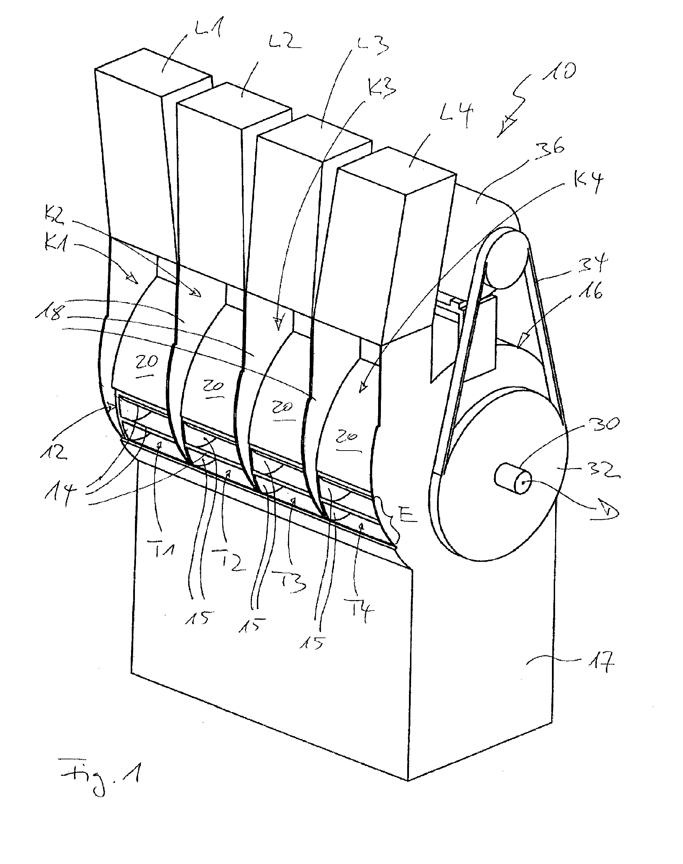

Figur 1 zeigt eine Durchströmturbine 10 gemäß der Erfindung mit einem Turbinenrad 12, das eine Vielzahl von Turbinenschaufeln 14 aufweist. Das Turbinenrad 12 ist um eine Drehachse D drehbar in einem Turbinengehäuse 16 gelagert. Eine Drehung des Turbinenrads 12 wird außerhalb des Gehäuses 16 an einer durch die Gehäusewandung durchgehenden Turbinenwelle 30 und einer auf der Turbinenwelle 30 drehfest sitzenden Scheibe 32 abgenommen und über eine Kette bzw. einen Riemen 34 auf einen Generator 36 zur Stromerzeugung übertragen.

Erfindungsgemäß ist das Turbinenrad 12 in mehrere Turbinenradabschnitte unterteilt, im dargestellten Ausführungsbeispiel in insgesamt vier Abschnitte T1, T2, T3, T4. Die Unterteilung in die Turbinenradabschnitte T1, T2, T3, T4 kann bspw. mittels Trennelementen 15 erfolgen, die im wesentlichen senkrecht zu der Richtung der Drehachse D bzw. zu der Längserstreckung des Turbinenrads in vorbestimmtem Abstand zwischen die Turbinenradschaufeln eingebracht sind. Die Abstände sind so gewählt, dass das Turbinenrad 12 in vier im wesentlichen gleich breite Abschnitte T1, T2, T3, T4 unterteilt ist. Selbstverständlich ist es auch möglich, Abschnitte unterschiedlicher Breite zu erzeugen. Auch die Anzahl der Abschnitte kann variieren und kann vom Fachmann abhängig von der Größe der Turbine geeignet bestimmt werden. Vier Abschnitte sind im Hinblick auf das Ziel der Erfindung, einen möglichst guten Wirkungsgrad bei geringem Wasserfluss zu erzeugen, eher als Minimum anzusehen.

Das Turbinengehäuse 16 weist eine entsprechende Anzahl zugeordneter Gehäusekammern K1, K2, K3, K4 auf, die sich oberhalb, d.h. einlaufseitig an die Turbinenradabschnitte T1, T2, T3, T4 anschließen. Die Gehäusekammern K1, K2, K3, K4 sind durch Trennwände 18 gebildet, die mit den Trennelementen 15 zur Bildung der Turbinenradabschnitte T1, T2, T3, T4 ausgerichtet sind.

Die Gehäusekammern dienen als sogenannte Einlaufkanäle, die das Fluid zum Antreiben der Turbine (in der Regel Wasser und daher im Kontext dieser Anmeldung auch stets als "Wasser" bezeichnet) auf die Turbinenradabschnitte T1, T2, T3, T4 führen.

Innerhalb der Gehäusekammern sind Stauflächen 20 angeordnet, die sich im wesentlichen parallel zu der Umfangsfläche des Turbinenrads 12 erstrecken und bis zu der Höhe einer Einlauföffnung E (Wassereintrittskante) des Turbinenrads 12 erstrecken. Die Stauflächen 20 dienen zur Erzeugung einer Verengung der Querschnittsfläche für das anströmende Wasser in dem jeweiligen Einlaufkanal.

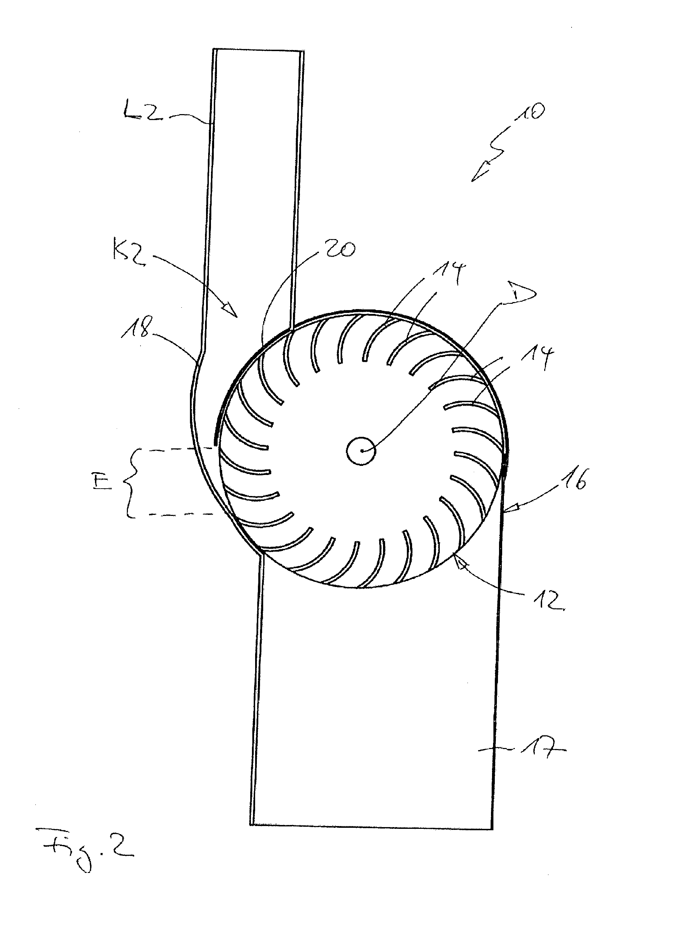

Wie insbesondere auch aus der Darstellung der Figur 2 ersichtlich ist, sind die Trennwände 18 der Einlaufkanäle K1, K2, K3, K4 bis nach unten durchgezogen, so dass eine Trennung der einzelnen Abschnitte voneinander gewährleistet ist.

Oberhalb der Einlaufkanäle K1, K2, K3, K4 können wie dargestellt Zuführleitungen L1, L2, L3, L4 für jeden Einlaufkanal K1, K2, K3, K4 vorgesehen sein. Das Gehäuse 16 kann auslaufseitig, d.h. stromabwärts des Turbinenrads 12, als Auslaufkanal 17 ausgebildet sein.

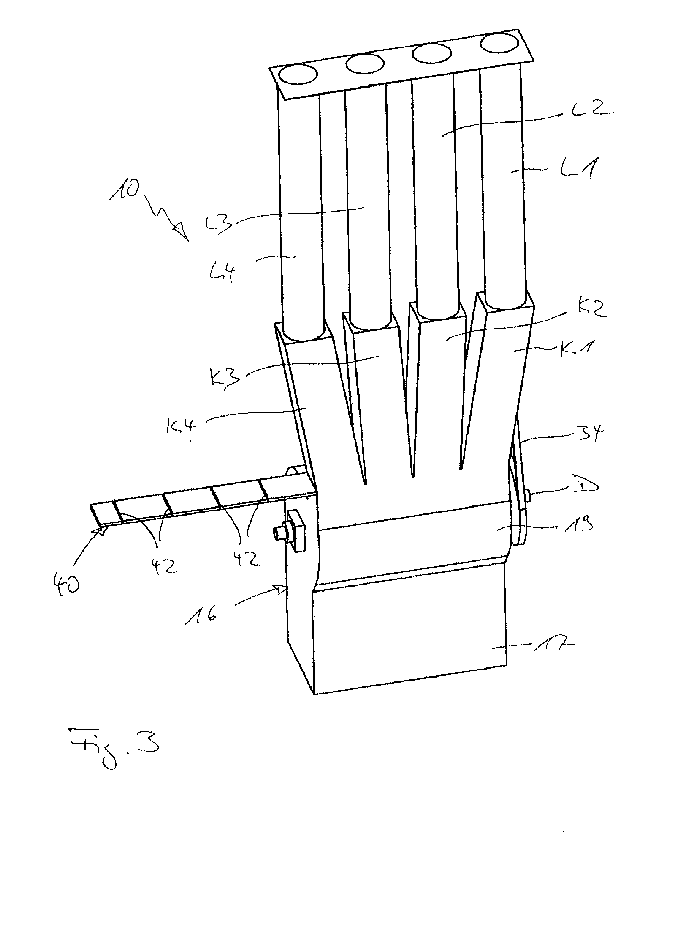

Die Darstellung der Figur 1 ist stark vereinfacht und zudem teilweise geöffnet, um das Verständnis der Erfindung zu erleichtern. Die sichtbaren Teile der Kammern und des Turbinenrads, insbesondere mit den Bezugszeichen 14, 15, 18, 20 sind im "normalen" Betriebszustand nicht sichtbar und von einem Teil des Turbinengehäuses 16 umgeben (vgl. nur die Darstellung der Figur 3).

Zur weiteren Verbesserung des Wirkungsgrades ist eine vorzugsweise unabhängige Regelung der Einlaufkanäle bzw. deren Zuführleitungen vorgesehen. Diese kann in einer dem Fachmann an sich bekannten Art und Weise erfolgen, bspw. mittels Deckeln, Schieber, Ventilen, Stellklappen o.dgl.

Figur 3 zeigt eine Ausführungsvariante einer Regelung mit einem Schieber 40, bei der es sich nicht um eine unabhängige Regelung handelt. Abhängig von dem Wasserfluss werden die einzelnen Turbinenradabschnitte gesperrt oder geöffnet. Bei sehr niedrigem Wasserfluss ist der Schieber nach innen geschoben und sperrt den Zufluss aus allen Kammern, um einen Rückstau zu erzeugen. Bei etwas höherem, aber immer noch niedrigen Wasserfluss, kann der Schieber eine Stellposition (entsprechende den Markierungen 42 auf dem Schieber 40, die jeweils einer Kammer entsprechen) nach außen geschoben werden und gibt somit den Zufluss aus der ersten Kammer K1 auf den zugeordneten ersten Turbinenradabschnitt T1 frei, usw. bis der Schieber 40 sich in der ganz nach außen gezogenen Position (wie in Figur 3 dargestellt) befindet.

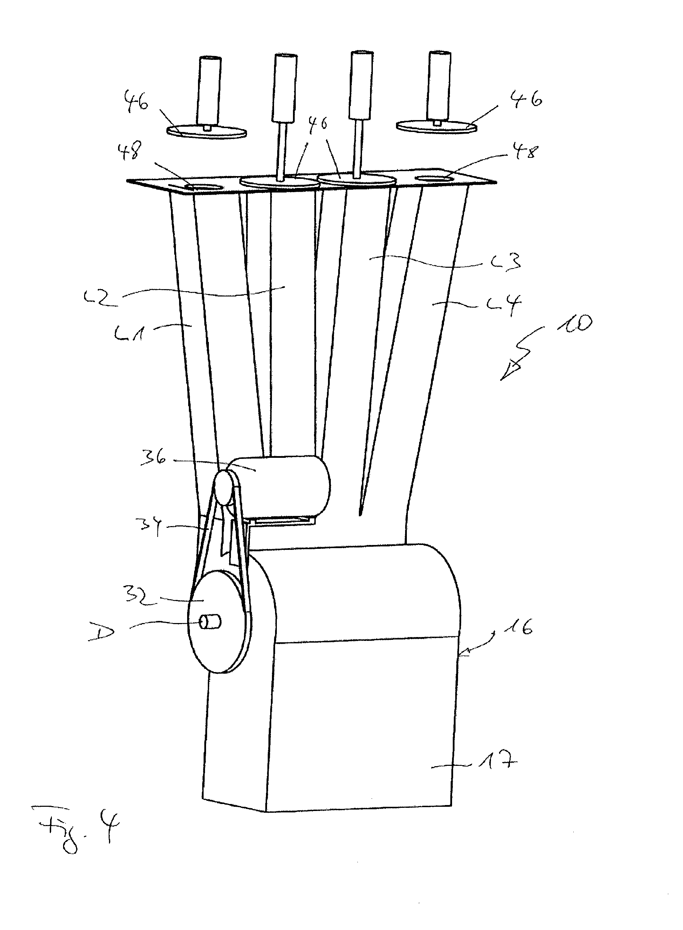

Eine unabhängige Regelung des Zuflusses und Rückstaus der einzelnen Zuleitungen bzw. Kammern kann mittels eines Ventildeckelsystems erfolgen, wie es stark schematisch in Figur 4 dargestellt ist. Einzelne und unabhängig voneinander bewegbare Ventildeckel 46 verschließen nach Bedarf im Wasserfluss liegende Öffnungen 48 der Zuführleitungen L1, L2, L3, L4 der Kammern K1, K2, K3, K4 bzw. geben diese frei.

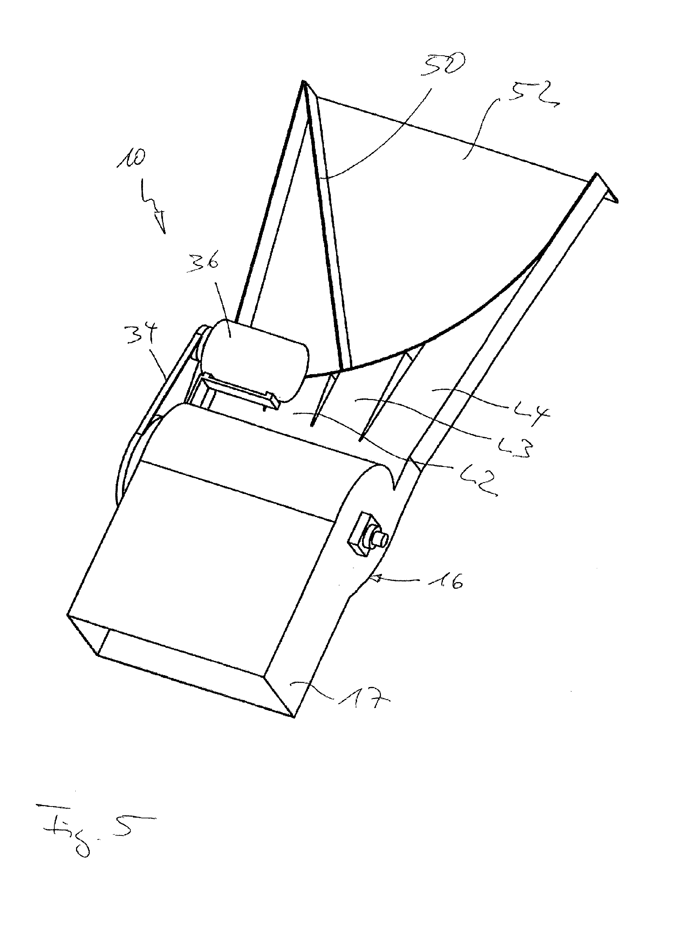

Eine weitere Alternative für eine Regelung des Zuflusses zu den einzelnen Kammern K1, K2, K3, K4 ist in Figur 5 veranschaulicht. Hier ist eine mit einer Vorspannung versehene Stellklappe 50 vorgesehen, die im Ruhezustand gegen die Schwerkraft nach oben (also stromaufwärts) vorgespannt ist. Die Stellklappe 50 ist mit einem Ende an einer trichterförmigen Zuleitung 52 angelenkt. Mit ihrem anderen Ende bewegt sie sich entweder frei entlang einer Ebene innerhalb der Zuleitung 52, oder sie wird innerhalb der Zuleitung 52 auf einer Kreissegmentbahn geführt (bspw. mittels einer Stiftführung).

Die Stellklappe 50 ist derart ausgebildet, dass sie sich bei zunehmender Beaufschlagung mit Wasser, das der Schwerkraft folgend in der (nicht unterteilten) Zuleitung 52 nach unten fließt, immer weiter nach unten bewegt und dadurch sukzessiv die einzelnen Zuführleitungen L4, L3, L2, L1 freigibt, die stromabwärts in der Zuleitung 52 ausgebildet sind. Zusätzlich kann eine (nicht dargestellte) Sperrklinke (die bspw. der Drehachse der Stellklappe 50 zugeordnet sein kann) vorgesehen sein, die sicherstellt, dass die Stellungen der Stellklappe 50 direkt mit den Zuführleitungen L1 bis L4 korrelieren, d.h. dass Zwischenstellungen der Stellklappe zwischen den Zuführleitungen vermieden werden. Dies kann alternativ auch bspw. mit einem Motor- bzw. Stelltrieb erfolgen.

Erfindungsgemäß wird somit auch bei kleinen Wassermengen ein relativ guter Wirkungsgrad einer Durchströmturbine erzielt. Die Durchströmturbine der Erfindung eignet sich insbesondere auch zum nachträglichen Einbau in bestehende Zu- bzw. Ablaufbauwerke ohne bauliche Veränderungen bzw. ohne zusätzlichen Maschinenraum.

Die Erfindung zeichnet sich durch die Erkenntnis einer durchgängigen Trennung der einzelnen Turbinenradabschnitte und zugeordneter Gehäusekammern bzw. Zuführleitungen aus, wodurch selbst bei kleinen in das Turbinengehäuse einströmenden Wassermengen ein durchgängiger Wasserstrahl über die Turbinenbreite erzeugt werden kann, der ausreichend Energie erzeugt, dass die Turbine selbst bei kleinen Teilwassermengen noch einen guten Nutzungsgrad aufweist. Unterstützend hierbei wirkt sich der Staudruck aus, der durch die Regelung der einzelnen Kanäle entsteht. Damit ist die erfindungsgemäße Durchströmturbine insbesondere zur Verwendung in Bereichen geeignet, in denen eine starke Schwankung der Wassermenge auftritt.

Die Durchströmturbine wird in den Wasserfluss einer Wasseranlage eingesetzt. Die Turbine kann mit einem Saugrohr ummantelt sein, das die volle Ausnutzung der vorhandenen Fallhöhe gewährleistet, ohne dass die Turbine (direkt) im Wasser stehe muss. Dies ermöglicht bzw. erleichtert den Einbau in bestehende Anlagen. Für den Fall von "Hochwasser" und für Wartungszwecke können neben der Turbine Umfahrungsrohre angebracht sein. Durch die beschriebene Regelung der einzelnen getrennten Zuführkanäle kann der Wasserstand oberhalb der Zulauföffnungen so gesteuert werden, dass bei geringem Wasserfluss (bspw. bei Trockenwetter) die Stauhöhe so hoch gehalten wird, dass keinerlei Wasser durch die Umfahrungsrohre fließt, aber trotzdem (für die Turbinenabschnitte) ein Regenwetter entsprechender hoher Wasserstand zur Verfügung steht, verbunden mit entsprechend hoher Energieausbeute.

Erfindungsgemäß wird somit gewährleistet, dass auch mit geringen Wassermengen eine ausreichend schnelle Beschleunigung und schnelle Drehung der Turbine erreicht wird, um einen guten Wirkungsgrad zur elektrischen Stromerzeugung zu erzielen. Dies wird durch eine Anstauung des Wassers in den erfindungsgemäßen Gehäusekammern und die damit verbundene Erhöhung der Strahlkraft des Wassersauf die Turbinenschaufeln erreicht.

## Patentansprüche

1. Durchströmturbine (10) mit einem eine Vielzahl von Turbinenschaufeln (14) aufweisenden Turbinenrad (12), dessen Drehachse (D) sich im wesentlichen horizontal erstreckt, und mit einem das Turbinenrad (12) aufnehmenden Turbinengehäuse (16), wobei die Turbinenrad (12) in Längserstreckung in mindestens zwei Turbinenradabschnitte (T1, T2, T3, T4) unterteilt ist und das Turbinengehäuse (16) den einzelnen Turbinenradabschnitten (T1, T2, T3, T4) zugeordnete Gehäusekammern (K1, K2, K3, K4) aufweist, durch die jeweils Wasser auf die Turbinenradabschnitte (T1, T2, T3, T4) strömt.

2. Durchströmturbine (10) nach Anspruch 1, bei der die Gehäusekammern als unabhängig voneinander regelbare Einlaufkanäle (K1, K2, K3, K4) ausgebildet sind.

3. Durchströmturbine (10) nach Anspruch 1 oder 2, bei der die Unterteilung des Turbinenrads (12) in Turbinenradabschnitte (T1, T2, T3, T4) mittels im wesentlichen senkrecht zu der Längserstreckung bzw. Drehachse (D) des Turbinenrads (12) angeordneter Trennelemente (15) erfolgt.

4. Durchströmturbine (10) nach Anspruch 3, bei der zwischen den Gehäusekammern (K1, K2, K3, K4) vorgesehene Trennwände (18) mit zugeordneten Trennelementen (15) ausgerichtet sind.

5. Durchströmturbine (10) nach einem der Ansprüche 1 bis 4, bei der jedem Turbinenradabschnitt (T1, T2, T3, T4) eine den Turbinenradabschnitt (T1, T2, T3, T4) zu der jeweiligen zugeordneten Gehäusekammer (K1, K2, K3, K4) hin bis zu einer Wassereintrittskante trennende Staufläche (20) zugeordnet ist.

6. Durchströmturbine (10) nach Anspruch 5, bei der die Staufläche (20) im wesentlichen parallel zu einer Umfangskrümmung des Turbinenrads (12) verläuft.

7. Durchströmturbine (10) nach einem der Ansprüche 2 bis 6, bei der eine Regelung der Einlaufkanäle (K1, K2, K3, K4) mittels Deckeln, Schieber, Ventilen oder Stellklappen erfolgt.

8. Durchströmturbine (10) nach einem der Ansprüche 1 bis 7, bei der jeder Gehäusekammer (K1, K2, K3, K4) eine Zuführleitung (L1, L2, L3, L4) vorgeschaltet ist.
